(19) Europäisches Patentamt
European Patent Office
Office européen des brevets

(11) EP 3 738 755 A1

(12) # EUROPEAN PATENT APPLICATION

(43) Date of publication:
**18.11.2020 Bulletin 2020/47**

(51) Int Cl.:
***B29C 70/48*** *(2006.01)* ***B29D 99/00*** *(2010.01)*

(21) Application number: **19182764.1**

(22) Date of filing: **27.06.2019**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **14.05.2019 CN 201910401183**

(71) Applicant: **Covestro Deutschland AG**
**51373 Leverkusen (DE)**

(72) Inventors:
- **Di, Wu**
  **201206 Pudong Shanghai (CN)**
- **Yongming, Gu**
  **201208 Pudong New District (CN)**
- **Ian, Zheng**
  **201500 Zhujing Town**
  **Jinshan District (CN)**

(74) Representative: **Levpat**
**c/o Covestro AG**
**Gebäude 4825**
**51365 Leverkusen (DE)**

(54) **METHOD FOR PREPARING A POLYURETHANE COMPOSITE BY A VACUUM INFUSION PROCESS**

(57) The invention relates to a method for preparing a polyurethane composite by a vacuum infusion process, a polyurethane composite obtained by the method and use thereof. The method for preparing a polyurethane composite by a vacuum infusion process of the invention can improve production efficiency, save raw materials and reduce production costs.

EP 3 738 755 A1

## Description

### Technical field

The invention relates to a method for preparing a polyurethane composite by a vacuum infusion process, a composite obtained by the method and use thereof.

### Prior art

Polyurethane composites are widely used in various fields such as pultruded window frames, home appliances and furniture and wind turbine blades. In recent years, the superiority of polyurethane composites in the production of wind turbine blades has received increasing attention. Wind energy is considered to be one of the cleanest and most environmentally friendly energy sources available today. So wind turbines have always been demanded by the market. Compared with conventional wind turbine blades made from epoxy resins, wind turbine blades made from polyurethane composites have the advantages of lower cost and better physical properties. However, polyurethane is sensitive to water, while core materials, fiber reinforcing materials, flow media, etc. used to produce the wind turbine blades usually contain a certain amount of moisture. Thus, it is necessary to carry out dehydration drying before injecting polyurethane compositions. Moreover, due to the difficulty in controlling the humidity of the production environment of large composite articles, it is impossible to dry the materials in advance. How to control the humidity of auxiliary materials such as core materials, fiber reinforcing materials and flow media simply and effectively is a problem that needs to be solved in the industry urgently.

CA 2477564 C describes a process for thermoset composite preforms. Said patent refers to drying of materials under vacuum and heating with a drying oven temperature of 100 °C for 2 hours and a pressure of less than 725 mm Hg (966 KPa).

CN 103669616 B discloses an inorganic composite core material of mixed glass fiber cotton and glass powder and preparation method thereof. Said core material is obtained by stacking thin core material layers, which are produced by mixing the glass fiber cotton and glass powder. The core material is easy to process, or punch, or chamfer, or flat. The glass fiber cotton may be cotton from flame method, cotton from centrifugation method or a combination thereof. The glass powder has an average particle diameter of 0.5 to 6.0 $\mu$m. Due to addition of the glass powder, the inorganic composite core material of said invention enables to reduce expansion of the vacuum insulation panels when they are used, and reduce the expansion ratio of the vacuum insulation panels for construction after they are installed on a wall. The temperature of the drying oven is 250 to 400 °C.

CN 103072287 A discloses a process for preparing a wind turbine blade from a composite based on fiber-reinforced resin matrix. The wind turbine blade comprises an embedded part for blade root, a foamed core and a composite coating having an epoxy resin and reinforcing fibers as the matrix, wherein the epoxy resin is an injectable epoxy-vinyl ester resin and the reinforcing fibers is a glass fiber fabric and a carbon fiber fabric. The injection molding is applied for the process including steps in the following sequence: (1) cutting the glass fiber fabric and the carbon fiber fabric into layers of the specified size according to design requirements, cleaning and heating the mold; (2) placing the layers in the upper and lower molds of the wind blade mold, as well as the embedded part for blade root and the foamed core; (3) closing the mold, and injecting the epoxy-vinyl ester resin system into the closed form cavity by an injection device, vacuumizing and keeping the mold at 25 °C; (4) opening the mold, wherein the wind blade is formed. The blade of the invention is formed in one step and has high dimensional and appearance precision, high surface smoothness. The process shows high molding efficiency, small environmental pollution, less than 20 ppm of volatile organic compounds, and improved production efficiency.

WO 2008119942 A describes a method for preparing a fiber-reinforced composite, which includes dehumidification drying. The heating temperature thereof is 90 °C and the duration time is 6 hours.

CN 1108334 C disclosed a method for preparing a carbon fiber reinforced cast nylon composite, comprising the following steps: pretreating the carbon fibers wherein the carbon fiber to be treated is immersed in a nitric acid solution, and then washed thoroughly with sodium hydroxide solution and water until the pH value shows no acidity; mixing the treated carbon fibers and the caprolactam monomers uniformly, heating the mixture in a vessel to melt, and dehydrating the vessel under vacuum; then adding sodium hydroxide as a catalyst, and heating the mixture to melt; adding toluene diisocyanate as an activator, pouring the mixture into the mold, demolding after holding the temperature. The invention provides higher mechanical strength such as tensile strength and bending strength as well as higher tribological properties compared to those of cast nylons. The vacuum degree of vacuum dehumidification is 0.1Pa/0.01Pa/0.001Pa, and the heating temperature is 120 °C.

Despite the above disclosures, there is an urgent need for a more efficient and superior method for producing polyurethane composites.

## Summary of the invention

One aspect of the present invention is to provide a method for preparing a polyurethane composite by a vacuum infusion process. Said method comprises the following steps:

placing a reinforcing material, a core material and/or a flow medium in a mold, wherein the temperature is controlled at 20 to 50 °C, preferably 20 to 45 °C, more preferably 30 to 45 °C,
particularly preferably 33 to 37 °C;
vacuumizing, wherein the pressure is controlled at 0 to 30 mbar, preferably 0 to 25 mbar, more preferably 0 to 20 mbar, for 1 to 6 hours, preferably 2 to 4 hours;
injecting a polyurethane composition and
demolding after curing to obtain the polyurethane composite.

Preferably, the curing is carried out under heating.
Preferably, the heating is carried out in a way that the heating temperature of the mold is firstly set to a relatively high temperature, and then gradually lowered to room temperature; more preferably, the heating temperature of the mold is firstly set to 40 to 50 °C, preferably 40 to 45 °C and then gradually lowered to 20 to 25 °C.
Preferably, the heating is one, two or more selected from the group consisting of electric blanket heating, electric film heating, microwave heating, infrared heating and hot air heating.
Preferably, the reinforcing material is selected from the group consisting of entangled glass fiber layers, glass fiber woven fabrics and glass fiber gauzes, cut or ground glass fibers or mineral fibers, as well as fiber mats, fiber nonwovens and fiber knits based on polymer fibers, mineral fibers, carbon fibers, glass fibers or aramid fibers, and mixtures thereof.
Preferably, the core material is preferably balsa wood, PVC foam, SAN foam, polyurethane foam, PS foam, PMI foam and PET foam.
Preferably, the flow medium comprises a peel ply, and said peel ply is preferably a polyester peel ply.
Preferably, the method further comprises:

placing a reinforcing material, a core material and/or a flow medium in a mold, covering the reinforcing material, the core material and/or the flow medium with a first film, and sealing the rim of the first film with the mold, and vacuumizing between the first film and the mold;
laying a second film to cover the first film, fixing the second film, sealing the rims of the first film and the second film, wherein an air inlet channel and an air outlet channel are reserved;
heating the mold, while filling hot air between the first film and the second film to provide a temperature close to the mold temperature for the upper surface of the first film.

Preferably, the polyurethane composition comprises the following components:

a component A, comprising one or more organic polyisocyanates;
a component B, comprising:

b1) one or more organic polyols, which is present in a content of 21 to 60 wt%, based on the total weight of the polyurethane composition as 100 wt%;
b2) one or more compounds having the structure of formula (I)

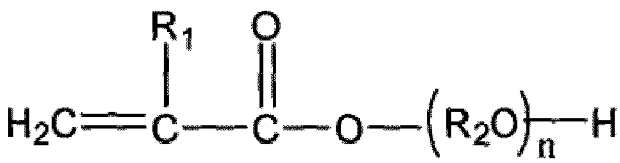

I

wherein R1 is selected from hydrogen, methyl or ethyl; R2 is selected from an alkylene group having 2 to 6 carbon atoms, 2,2-di(4-phenylene)-propane, 1,4-xylylene, 1,3-xylylene, 1,2-xylylene; n is an integer selected from 1 to 6; and

a component C, a free radical initiator.

The polyurethane composition of the present invention as described above can provide a longer pot life. Preferably, the pot life is > 40 minutes, more preferably > 60 minutes, which can meet the needs for large polyurethane products.
Preferably, the organic polyol has a functionality of 1.7 to 6, preferably 1.9 to 4.5 and a hydroxyl value of 150 to 1100 mg KOH/g, preferably 150 to 550 mg KOH/g.
Preferably, the component b2) is present in a content of 4.6 to 33 wt% based on the total weight of the polyurethane composition as 100 wt%.
Preferably, the component b2) is one, two or more selected from the group consisting of hydroxyethyl methacrylate, hydroxypropyl methacrylate, hydroxybutyl methacrylate, hydroxyethyl acrylate, hydroxypropyl acrylate and hydroxybutyl acrylate.
Preferably, the method further comprises:

providing a reaction injection device (40), which comprises at least two storage tanks (48, 49) for accommodating the components of the polyurethane resin, a vacuumizing device (50) and
feed unit (44a, 44b), wherein each of the feed unit (44a, 44b) is connected to the storage tank (48, 49) via a feed line (41, 42) and a mixing unit (43), and the components from the feed units (44a, 44b) are mixed together;
wherein the rim of the mold is sealed and the mold is connected to at least a first injection port (31), which can be used for vacuumizing the mold (5) and supplying the mixed components to the mold (5); and the mold comprises at least a drying channel (32) for providing a drying gas; during the vacuum infusion, the drying gas is supplied to the mold to dry the core material, the reinforcing material and/or the flow medium (21) placed in the mold; and the mold (5) is vacuumized by means of a vacuum source (34), and
the mold is connected to the reaction injection device (40) via an injection line (45) at the injection line (31); and the mold can be vacuumized via the injection line (45) through a laterally closable outlet (46), which is connected to a vacuum source (47);
degassing the mold (5) and the layers (21) contained therein, the injection line (45), and the optional feed unit (44a, 44b)/mixing unit (43) with the vacuum source (47) and drying, wherein the drying gas can be introduced via the drying channel (32);
beginning the vacuum infusion process with introducing the degassed components in the feed lines (41, 42) from the storage tanks (48, 49) into the feed units (44a, 44b) of the reaction injection device (40), and obtaining the polyurethane resin from the components in the mixing unit (43), wherein the outlet (46) of the vacuum source (47) is closed before the polyurethane resin arrives;
injecting the polyurethane resin into the mold (5) via the injection line (31) while vacuumizing the mold (5) via the drying channel (32) by the vacuum source (34), wherein the injection pressure measured at the injection port of the mold (5) is lower than the external pressure; curing the polyurethane resin in the mold (5).

The polyurethane resin used in the present invention has a viscosity which is greatly reduced compared with epoxy resins, and has good weather resistance and fatigue resistance, and can ensure the service life of the composite articles. In addition, the polyurethane composition of the present invention has a short curing cycle, which can improve the utilization rate of devices, and make the resin residue amount to be easily controlled during the production process, which can reduce the production costs. Since the polyurethane composition reacts with moisture, it needs to be dried during application in the composite. Moreover, the humidity of the production environment of large composite articles is difficult to control, and the material cannot be dried in advance. Because of the high temperature, the traditional methods for heating and drying needs a very long cooling time, which greatly affects the production efficiency. Through repeated practice, we have unexpectedly discovered that the method of the present invention can simply and effectively control the humidity of the core material, the reinforcing material and the flow medium, thereby improving the production efficiency, saving resources, and being more favorable to environmental protection. In addition, the polyurethane composition of the present invention has a long pot life, so that polyurethane composites having uniform quality and excellent physical properties can be obtained when preparing a large polyurethane product. In particular, for large polyurethane products, the method of the present invention provides an effective solution to the harsh application conditions of polyurethanes (e.g., sensitive to water), achieves high production efficiency while saving costs and being more environmentally friendly.
Still another aspect of the present invention is to provide a polyurethane composite obtained by the method for preparing a polyurethane composite by a vacuum infusion process of the present invention.
Yet another aspect of the invention is to provide use of the polyurethane composite of the present invention in a wind turbine blade.
Still another aspect of the invention is to provide a polyurethane product. It includes a polyurethane composite prepared by a method for preparing a polyurethane composite by a vacuum infusion process.

Preferably, the polyurethane product is selected from the group consisting of a wind turbine blade, a radome, a single or sandwich continuous sheet, preferably a spar cap, a web plate, a blade root and/or a blade housing of a wind turbine blade.

## Description of drawings

The present invention will now be illustrated with reference to the accompanying drawings in which:

Fig. 1 shows a mold and layers arranged thereon in the method for preparing a polyurethane composite according to example 1 of the present invention, wherein 1 represents a core material, a fiber reinforcing material, 2 represents an injection line, 3 represents a peel ply and a flow mesh; 4 represents a vacuumizing line; 5 represents a mold.
Fig. 2 shows a photograph of the surface condition of a polyurethane composite obtained by the polyurethane resin of example 1 of the present invention.
Figure 3 shows a reaction injection device and a mold of the present invention, wherein 5 represents a mold; 21 represents a core material, a reinforcing material and/or a flow medium; 31 represents a injection line; 32 represents a drying channel; 41, 42 represent feed lines; 43 represents a mixing unit; 44a, 44b represent feed units; 45 represents injection line; 46 represents closable outlet; 47 represents vacuum source; 48, 49 represent storage tanks; 34, 50 represent vacuumizing devices.

## Specific embodiments

Various aspects of the present invention are now described in detail.
The first aspect of the present invention is to provide a method for preparing a polyurethane composite by a vacuum infusion process. Said method comprises the following steps:

placing a reinforcing material, a core material and/or a flow medium in a mold, wherein the temperature is controlled at 20 to 50 °C, preferably 20 to 45 °C, more preferably 30 to 45 °C,
particularly preferably 33 to 37 °C;
vacuumizing, wherein the pressure is controlled at 0 to 30 mbar, preferably 0 to 25 mbar, more preferably 0 to 20 mbar, for 1 to 6 hours, preferably 2 to 4 hours;
injecting a polyurethane composition and
demolding after curing to obtain the polyurethane composite.

Preferably, the curing is carried out under heating.
Preferably, the heating is carried out in a way that the heating temperature of the mold is firstly set to a relatively high temperature, and then gradually lowered to room temperature; more preferably, the heating temperature of the mold is firstly set to 40 to 50 °C, preferably 40 to 45 °C and then gradually lowered to 20 to 25 °C.
Preferably, the heating is one, two or more selected from the group consisting of electric blanket heating, electric film heating, microwave heating, infrared heating and hot air heating.
Preferably, the reinforcing material is selected from the group consisting of entangled glass fiber layers, glass fiber woven fabrics and glass fiber gauzes, cut or ground glass fibers or mineral fibers, as well as fiber mats, fiber nonwovens and fiber knits based on polymer fibers, mineral fibers, carbon fibers, glass fibers or aramid fibers, and mixtures thereof.
Preferably, the core material is preferably balsa wood, PVC foam, SAN foam, polyurethane foam, PS foam, PMI foam and PET foam.
Preferably, the flow medium comprises a peel ply, and said peel ply is preferably a polyester peel ply.
Preferably, the method further comprises:

placing a reinforcing material, a core material and/or a flow medium in a mold, covering the reinforcing material, the core material and/or the flow medium with a first film, and sealing the rim of the first film with the mold, and vacuumizing between the first film and the mold;
laying a second film to cover the first film, fixing the second film, sealing the rims of the first film and the second film, and reserving an air inlet channel and an air outlet channel;
heating the mold, while filling hot air between the first film and the second film to provide a temperature close to the mold temperature for the upper surface of the first film.

Preferably, the polyurethane composition comprises the following components:

a component A, comprising one or more organic polyisocyanates;
a component B, comprising:

b1) one or more organic polyols, which is present in a content of 21 to 60 wt%, based on the total weight of the polyurethane composition as 100 wt%;
b2) one or more compounds having the structure of formula (I)

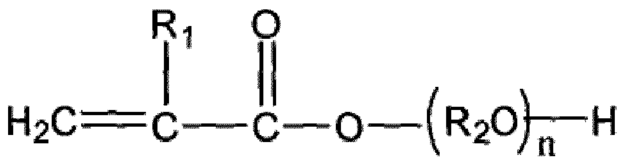

I

wherein R1 is selected from hydrogen, methyl or ethyl; R2 is selected from an alkylene group having 2 to 6 carbon atoms, 2,2-di(4-phenylene)-propane, 1,4-xylylene, 1,3-xylylene, 1,2-xylylene; n is an integer selected from 1 to 6; and

a component C, a free radical initiator.

Preferably, the organic polyol has a functionality of 1.7 to 6, preferably 1.9 to 4.5 and a hydroxyl value of 150 to 1100 mg KOH/g, preferably 150 to 550 mg KOH/g.
Preferably, the component b2) is present in a content of 4.6 to 33 wt% based on the total weight of the polyurethane composition as 100 wt%.
Preferably, the component b2) is one, two or more selected from the group consisting of hydroxyethyl methacrylate, hydroxypropyl methacrylate, hydroxybutyl methacrylate, hydroxyethyl acrylate, hydroxypropyl acrylate and hydroxybutyl acrylate.
Preferably, the method further comprises:

providing a reaction injection device (40), which comprises at least two storage tanks (48, 49) for accommodating the components of the polyurethane resin, a vacuumizing device (50) and
feed unit (44a, 44b), wherein each of the feed unit (44a, 44b) is connected to the storage tank (48, 49) via a feed line (41, 42) and a mixing unit (43), the components from the feed units (44a, 44b) are mixed together;
wherein the rim of the mold is sealed and the mold is connected to at least a first injection port (31), which can be used for vacuumizing the mold (5) and supplying the mixed components to the mold (5); and the mold comprises at least a drying channel (32) for providing a drying gas; during the vacuum infusion, the drying gas is supplied to the mold to dry the core material, reinforcing material and/or flow medium (21) placed in the mold; and the mold (5) is vacuumized by means of a vacuum source (34), and
the mold is connected to the reaction injection device (40) via an injection line (45) at the injection line (31); and the mold can be vacuumized via the injection line (45) through a laterally closable outlet (46), which is connected to a vacuum source (47);
degassing the mold (5) and the layers (21) contained therein, the injection line (45), and the optional feed unit (44a, 44b)/mixing unit (43) with the vacuum source (47) and drying, wherein the drying gas can be introduced via the drying channel (32);
beginning the vacuum infusion process with introducing the degassed components in the feed lines (41, 42) from the storage tank (48, 49) into the feed units (44a, 44b) of the reaction injection device (40), and obtaining the polyurethane resin from the components in the mixing unit (43), wherein the outlet (46) of the vacuum source (47) is closed before the polyurethane resin arrives;
injecting the polyurethane resin into the mold (5) via the injection line (31) while vacuumizing the mold (5) via the drying channel (32) by the vacuum source (34), wherein the injection pressure measured at the injection port of the mold (5) is lower than the external pressure.

The polyester peel ply which can be used in the present invention refers to a peel ply made from polyester fiber. Polyester fiber (PET fiber) or PET fiber for short, commonly referred to as " dacron", is a general term for fibers made from polyesters obtained by polycondensation of various diols and aromatic dicarboxylic acids or esters thereof.

Preferably, the polyester peel ply is selected from the group consisting of plain weaves, twill weaves, satin weaves made of continuous fibers by weaving methods or fabrics made by knitting methods or fabrics directly made by stitching methods.

The polyester peel ply may be placed between the reinforcing material and the mold, or may be placed between the reinforcing material and/or the core material and the flow medium such as a flow mesh. The flow medium refers to a substance having a porous structure, which may be a material obtained by braiding, weaving, knitting, extruding or crocheting, a foam or a substance having a sieve or a network structure itself. Specifically, it includes but is not limited to woven flow meshs, pressed flow meshs, continuous fiber felts and hybrid flow meshs, for example, those obtained by mixing two or more of fiber fabrics such as woven flow meshs, pressed flow meshs, continuous fiber felts and chopped fiber felts. Those skilled in the art are familiar with materials that can be used as a flow medium, including but not limited to, polystyrene (PS), polyurethane (PUR), polyphenylene oxide (PPO), polypropylene, ABS, and glass fiber fabrics. Porous components or flow media are primarily used to aid in vacuumizing during the drying process and in guiding flow during the introduction of the polyurethane liquid material.

Molds that can be used in the present invention include, but are not limited to, molds of wind turbine blades and/or components thereof, molds of aircrafts and/or components thereof, molds of hulls and/or component thereof, molds of vehicle bodies and/or components thereof, and the like. In an example of the present invention, the mold is preferably a mold that can be used to produce wind turbine blades and/or components thereof in a polyurethane vacuum infusion process. The molds may have a heating function.

Optionally, the method for heating the peel ply, the fiber reinforcing material, the porous component and/or the core material of the present invention is one, two or more selected from the group consisting of mold heating, electric blanket heating, electric film heating, microwave heating, infrared heating and hot air heating. In the electric blanket heating and the electric film heating, the electric blanket and the electric film are placed under the mold or cover the film outside, and heat by supplying electric current. Other conventional heating methods in the art can all be used in the present invention.

The experimental results show that the method of the present invention provides a more efficient and energy-saving dehumidification method, thereby greatly improving the production efficiency for polyurethane composites, saving costs and being more environmentally friendly. In addition, the polyurethane composition of the present invention has a long pot life, so that polyurethane composites having uniform quality and excellent physical properties can be obtained when preparing a large polyurethane product. In particular, for large polyurethane products, the method of the present invention provides an effective solution to the harsh application conditions of polyurethanes, and achieves high production efficiency economically and efficiently.

The polyisocyanate of the present invention may be an organic polyisocyanate which may be any aliphatic, cycloaliphatic or aromatic isocyanate known for preparing polyurethane composites. Examples thereof include, but are not limited to, toluene diisocyanate (TDI), diphenylmethane diisocyanate (MDI), polyphenylpolymethylene polyisocyanate (pMDI), 1,5-naphthalene diisocyanate (NDI), hexamethylene diisocyanate (HDI), methylcyclohexyl diisocyanate (TDI), 4,4'-dicyclohexylmethane diisocyanate, isophorone diisocyanate (IPDI), p-phenylene diisocyanate (PPDI), p-xylene diisocyanate (XDI), tetramethylxylene diisocyanate (TMXDI), and polymers or combinations thereof. The isocyanate useful in the present invention has a functionality of preferably 2.0 to 3.5, particularly preferably 2.1 to 2.9. The isocyanate has a viscosity of preferably 5 to 700 mPa·s, particularly preferably 10 to 300 mPa·s, measured at 25 ° C according to DIN 53019-1-3.

When used in the present invention, the organic polyisocyanate includes isocyanate dimer, trimer, tetramer, pentamer or combinations thereof.

In a preferred example of the present invention, the isocyanate component A) is selected from the group consisting of diphenylmethane diisocyanate (MDI), polyphenylpolymethylene polyisocyanate (pMDI), and polymers, prepolymers or combinations thereof.

Blocked isocyanates can also be used as the isocyanate component A), which can be prepared by reacting an excess of organic polyisocyanate or a mixture thereof with a polyol compound. These compounds and their preparation methods are well known to those skilled in the art.

The polyurethane reaction system of the present invention comprises one or more organic polyols B1). The organic polyol is present in a content of 21 to 60 wt%, based on the total weight of the polyurethane reaction system as 100 wt%. The organic polyol may be an organic polyol commonly used in the art for preparing polyurethanes, including but not limited to polyether polyols, polyether carbonate polyols, polyester polyols, polycarbonate diols, polymer polyols, vegetable oil based polyol or a combination thereof.

The polyether polyol can be prepared by a known process, for example, by reacting an olefin oxide with a starter in the presence of a catalyst. The catalyst is preferably, but not limited to, a basic hydroxide, a basic alkoxide, antimony pentachloride, boron fluoride etherate, or a mixture thereof. The olefin oxide is preferably but not limited to tetrahydrofuran, ethylene oxide, propylene oxide, 1,2-butylene oxide, 2,3-butylene oxide, styrene oxide, or a mixture thereof, particularly preferably ehylene oxide and/or propylene oxide. The starter is preferably but not limited to a polyhydroxy compound or a polyamine compound. Said polyhydroxy compound is preferably but not limited to water, ethylene glycol, 1,2-propanediol, 1,3-propanediol, diethylene glycol, trimethylolpropane, glycerol, bisphenol A, bisphenol S or a mixture thereof. Said polyamine compound is preferably but not limited to ethylene diamine, propylene diamine, butanediamine, hexanediamine, diethylenetriamine, toluenediamine or a mixture thereof.

Methods for measuring the hydroxyl value are well known to those skilled in the art and are disclosed, for example, in Houben Weyl, Methoden der Organischen Chemie, vol. XIV/2 Makromolekulare Stoffe, p. 17, Georg Thieme Verlag; Stuttgart 1963. The entire contents of this document are incorporated herein by reference.

As used herein, unless otherwise indicated, the functionality and hydroxyl value of organic polyols refer to average functionality and average hydroxyl value.

Optionally, the polyurethane reaction system of the present invention further comprises one or more compounds B4) having the structure of formula (I)

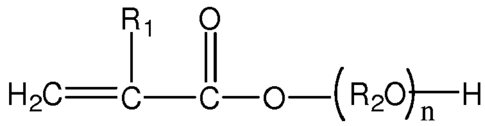

I ,

wherein $R_1$ is selected from hydrogen, methyl or ethyl; $R_2$ is selected from an alkylene group having 2 to 6 carbon atoms; and n is an integer selected from 1 to 6.

In a preferred example of the present invention, R2 is selected from the group consisting of ethylene, propylene, butylene, pentylene, 1-methyl-1,2-ethylene, 2-methyl-1,2-ethylene, 1-ethyl-1,2-ethylene, 2-ethyl-1,2-ethylene, 1-methyl-1,3-propylene, 2-methyl-1,3-propylene, 3-methyl-1,3-propylene, 1-ethyl-1,3-propylene, 2-ethyl-1,3-propylene, 3-ethyl-1,3-propylene, 1-methyl-1,4-butylene, 2-methyl-1,4-butylene, 3-methyl-1,4-butylene and 4-methyl-1,4-butylene, 2,2-di(4-phenylene)-propane, 1,4-xylylene, 1,3-xylylene, 1,2-xylylene.

In a preferred example of the present invention, the component B2) is selected from the group consisting of hydroxyethyl methacrylate, hydroxypropyl methacrylate, hydroxybutyl methacrylate, hydroxyethyl acrylate, hydroxypropyl acrylate, hydroxybutyl acrylate or a combination thereof.

The compound of the formula (I) can be prepared by a method generally used in the art, for example, by esterification reaction of (meth)acrylic anhydride or (meth)acrylic acid, (meth)acryloyl halide compound with $HO-(R_2O)_n-H$. The preparation method is well known to those skilled in the art, for example, in "Handbook of Polyurethane Raw Materials and Auxiliaries" (Yijun Liu, published on April 1, 2005), Chapter 3; "Polyurethane Elastomer" (Houjun Liu, published in August 2012), Chapter 2. The entire contents of these documents are incorporated herein by reference.

The polyurethane reaction system of the present invention further comprises C) a free radical initiator. The radical initiator used in the present invention may be added to the polyol component or the isocyanate component or both components. Useful free radical initiators include, but are not limited to, peroxides, persulfides, peroxycarbonates, peroxyboric acid, azo compounds, or other suitable free radical initiators which can initiate the curing of double bond containing compounds, examples of which include tert-butyl peroxy isopropyl carbonate, tert-butyl peroxy-3,5,5-trimethylhexanoate, methyl ethyl ketone peroxide, and cumene hydroperoxide. The radical initiator is usually present in a content of 0.1 to 8 wt%, based on the total weight of the polyurethane reaction system of the present invention as 100 wt%. In addition, an accelerator such as a cobalt compound or an amine compound may also be present.

Optionally, the polyurethane reaction system may further comprise a catalyst for catalyzing the reaction of isocyanate groups (NCO) with hydroxyl groups (OH). Suitable polyurethane reaction catalysts are preferably, but not limited to, amine catalysts, organometallic catalysts, or mixtures thereof. The amine catalyst is preferably but not limited to triethylamine, tributylamine, triethylenediamine, N-ethylmorpholine, N,N,N',N'-tetramethyl-ethylenediamine, pentamethyldiethylene-triamine, N-methylaniline, N,N-dimethylaniline, or a mixture thereof. The organometallic catalyst is preferably but not limited to an organotin compound such as tin (II) acetate, tin (II) octoate, tin ethylhexanoate, tin laurate, dibutyl tin oxide, dibutyltin dichloride, dibutyltin diacetate, dibutyltin maleate, dioctyltin diacetate, or a mixture thereof. The catalyst is used in an amount of 0.001 to 10 wt%, based on the total weight of the polyurethane reaction system of the present invention as 100 wt%.

In an example of the present invention, in the polyaddition reaction of isocyanate groups and hydroxyl groups, the isocyanate groups may be those contained in the organic polyisocyanate (component A) or may also be those contained in the reaction intermediate of the organic polyisocyanate (component A) with the organic polyol (component B1) or component B2)). The hydroxyl groups may be those contained in the organic polyol (component B1) or component B2)) or may also be those contained in the reaction intermediate of the organic polyisocyanate (component A) with the organic polyol (component B1) or component B2)).

In an example of the present invention, the radical polymerization reaction is a polyaddition reaction of ethylenic bonds, wherein the ethylenic bonds may be those contained in the component B2) or may also be those contained in the reaction intermediate of the component B2) with the organic polyisocyanate.

In the examples of the present invention, the polyurethane polyaddition reaction (i.e., the polyaddition reaction of isocyanate groups with hydroxyl groups) is present simultaneously with a radical polymerization reaction. It is well known to those skilled in the art that suitable reaction conditions can be selected such that the polyurethane polyaddition reaction and the radical polymerization reaction are carried out in succession. However, the polyurethane matrix thus obtained has a different structure from that of a polyurethane matrix obtained by simultaneous polyaddition reaction and radical polymerization reaction. Thus, the mechanical properties and processability of the prepared polyurethane composites are different.

Optionally, the above polyurethane reaction system may further comprise an auxiliary or additive, including but not limited to a filler, an internal demolding agent, a flame retardant, a smoke suppressant, a dye, a pigment, an antistatic agent, an antioxidant, a UV stabilization, a diluent, a defoaming agent, a coupling agent, a surface wetting agent, a leveling agent, a water scavenger, a catalyst, a molecular sieve, a thixotropic agent, a plasticizer, a foaming agent, a foam stabilizer, a foam homogenizing agent, an inhibitor against free radical reaction or a combination thereof. These components may optionally be included in the isocyanate component A) and/or the polyurethane reaction system B) of the present invention. These components may also be stored separately as a component D), which is mixed with the isocyanate component A) and/or the polyurethane reaction system B) of the present invention and then used for the preparation of polyurethane composites. The selection of the above-mentioned auxiliaries or additives and the above-mentioned content that is not described in detail can be found in CN104974502A, which is entirely incorporated herein by reference.

A second aspect of the present invention is to provide a polyurethane composite which is obtained by the method for preparing a polyurethane composite by a vacuum infusion process of the present invention.

A third aspect of the invention is to provide use of the polyurethane composite of the present invention in a wind turbine blade.

A fourth aspect of the invention is to provide a polyurethane product comprising a polyurethane composite obtained by the method for preparing a polyurethane composite by a vacuum infusion process.

Preferably, the polyurethane product is selected from the group consisting of a wind turbine blade, a radome, a single or sandwich continuous plate, preferably a spar cap, a web plate, a blade root and/or a blade housing of a wind turbine blade.

Unless defined otherwise, all technical and scientific terms used herein have the same meaning as they are generally understood by those skilled in the art of the present invention. When definitions of the terms in this specification conflicts with the meaning generally understood by those skilled in the art of the present invention, the definitions described herein shall apply.

Unless stated otherwise, all values expressing quantities of ingredients, reaction conditions, and the like, as used herein, are understood to be modified by the term "about."

As used herein, "and/or" refers to one or all of the elements mentioned.

"including" and "comprising", as used herein, cover the cases where only the mentioned elements are present, as well as the cases where there are other unmentioned elements in addition to the mentioned elements.

Unless indicated otherwise, all percentages herein are percentages by weight.

The invention is now described using the examples by way of illustration without limitation.

## Examples

Description of tested performance parameters in the examples of the present application: Functionality refers to a value determined according to the formula in the industry: functionality = hydroxyl value * molecular weight / 56100; wherein the molecular weight is determined by GPC high performance liquid chromatography;

Isocyanate index refers to a value determined by the following formula:

$$\text{Isocyanateindex}(\%) = \frac{\text{MolesofisocyanategroupsNCOgroups)incomponentA}}{\text{MolesofgroupsreactivetowardisocyanategroupsincomponentB}} \text{Xd}$$

NCO content refers to the content of NCO groups in the system, measured according to GB/T 12009.4-2016.

Description of raw materials:

| Name of raw materials | Specification / type | Suppliers |
|---|---|---|
| Polyol | Baydur 78BD085 | Covestro Polymers (China) Co., Ltd. |
| Isocyanate | Desmodur 44CP20 | Covestro Polymers (China) Co., Ltd. |
| Biaxial fiber glass fabric | EKT811 (+45°/-45°) Specification: 808g/m2 | Chongqing Polycomp International Corp. |
| Injection hose / Omega hose | Material: PE | Shanghai Leadgo-tech Co., Ltd |
| Flow mesh | Material: PE | Shanghai Leadgo-tech Co., Ltd |
| PVC foam core material | Specification: 60kg/$m^3$ | 3A Composites (China) Ltd |
| Polyester peel ply | Gram weight: 95g/$m^2$ | Shanghai Leadgo-tech Co., Ltd |
| Film/vacuum bag film | Thickness: 50 $\mu$m | Shanghai Leadgo-tech Co., Ltd |
| adhesive strip | Type: WD209 | Shanghai KangdDa New Materials Co., Ltd |
| Warming blanket | Specification: width of 1m, length of 2m, thickness of 30 mm | Related market |

**Description of test methods:**

Temperature test: an infrared thermometer is used to monitor the surface temperature; Gram weight: the weight per unit area, specifically the weight of a fiber fabric, a flow mesh or a peel ply divided by the area thereof.

**Examples**

Example 1:

Two layers of biaxial glass fiber fabrics with length × width of 500*500 mm were laid on the mold. Then, a PVC foam core material with length × width of 400*400 mm was placed on the glass fiber fabrics, wherein the grooved side pointed upward. Afterwards, two more layers of biaxial fiber glass fabrics with length × width of 500*500 mm were laid on the foam core material. A piece of peel ply was placed on the second layer of glass fiber fabric. The flow mesh was placed on the peel ply. An injection hose with a length of 300 mm was obtained by cutting and placed next to the flow mesh. Two loops of adhesive sealing strips were stuck around each layer laid in the mold. Then, said layers were sealed with two layers of vacuum bag film.

Firstly, the heating temperature of the mold was set to 45 °C, which is then gradually lowered to 20 °C (gradually changed from high to low temperature with the heating time). The system was heated and the vacuum pump was connected to the injection hose. The system was vacuumized to 0 to 20 mbar and covered by a warming blanket to heat for 2 hours. The polyurethane composition could be injected without cooling. Once completed, it was cured by heating. After curing, the product was demolded. Auxiliary materials such as peel plies and flow meshes were removed.

The obtained polyurethane composite was inspected. No surface defects were found (as shown in Figure 2 in detail). All physical properties met the requirements.

It can be seen from the above example that, unlike conventional high temperature drying, the method of the present invention employs appropriate temperature and pressure and is carried out in an appropriate manner. Thus, no time-consuming cooling is required after drying, and the polyurethane resin can be infused directly after drying. It is very effective in saving time, thus increasing production efficiency.

While the invention has been described in detail as above for the purposes of the present invention, it is understood that the detailed description is only exemplary. In addition to the contents defined by the claims, various changes can be made by those skilled in the art without departing from the spirit and scope of the invention.

## Claims

1. A method for preparing a polyurethane composite by a vacuum infusion process, comprising:

   placing a reinforcing material, a core material and/or a flow medium (21) in a mold and heating, wherein the temperature is controlled at 20 to 50 °C, preferably 20 to 45 °C, more preferably 30 to 45 °C, particularly preferably 33 to 37 °C;
   vacuumizing, wherein the pressure is controlled at 0 to 30 mbar, preferably 0 to 25 mbar, more preferably 0 to 20 mbar, for 1 to 6 hours, preferably 2 to 4 hours;
   injecting a polyurethane composition and
   demolding after curing to obtain the polyurethane composite.

2. The method according to claim 1, **characterized in that** the heating is carried out in a way that the heating temperature is firstly set to 40 to 50 °C, preferably 40 to 45°C, and then gradually lowered to 20 to 25 °C.

3. The method according to claim 1 or 2, **characterized in that** the heating is one, two or more selected from the group consisting of electric blanket heating, electric film heating, microwave heating, infrared heating and hot air heating.

4. The method according to claim 1 or 2, **characterized in that** the reinforcing material is selected from the group consisting of entangled glass fiber layers, glass fiber woven fabrics and glass fiber gauzes, cut or ground glass fibers or mineral fibers, as well as fiber mats, fiber nonwovens and fiber knits based on polymer fibers, mineral fibers, carbon fibers, glass fibers or aramid fibers, and mixtures thereof.

5. The method according to claim 1 or 2, **characterized in that** the core material is preferably balsa wood, PVC foam, SAN foam, polyurethane foam, PS foam, PMI foam and PET foam.

6. The method according to claim 1 or 2, **characterized in that** the flow medium comprises a peel ply, and said peel ply is preferably a polyester peel ply.

7. The method according to claim 1 or 2, **characterized in that** the method further comprises:

   placing a reinforcing material, a core material and/or a flow medium in a mold, covering the reinforcing material, the core material and/or the flow medium with a first film, and sealing the rim of the first film with the mold, and vacuumizing between the first film and the mold;
   laying a second film to cover the first film, fixing the second film, sealing the rims of the first film and the second film, wherein an air inlet channel and an air outlet channel are reserved;
   heating the mold, while filling hot air between the first film and the second film to provide a temperature close to the mold temperature for the upper surface of the first film.

8. The method according to claim 1 or 2, **characterized in that** the polyurethane composition comprises the following components:

   a component A, comprising one or more organic polyisocyanates;
   a component B, comprising:

      b1) one or more organic polyols, which is present in a content of 21 to 60 wt%, based on the total weight of the polyurethane composition as 100 wt%;
      b2) one or more compounds having the structure of formula (I)

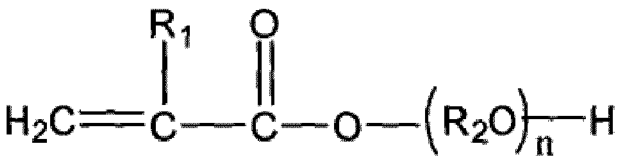

I

wherein R1 is selected from hydrogen, methyl or ethyl; R2 is selected from an alkylene group having 2 to 6 carbon atoms, 2,2-di(4-phenylene)-propane, 1,4-xylylene, 1,3-xylylene, 1,2-xylylene; n is an integer selected from 1 to 6; and

a component C, a free radical initiator.

**9.** The method according to claim 8, **characterized in that** the organic polyol has a functionality of 1.7 to 6, preferably 1.9 to 4.5 and a hydroxyl value of 150 to 1100 mg KOH/g, preferably 150 to 550 mg KOH/g.

**10.** The method according to claim 8, **characterized in that** the component b2) is present in a content of 4.6 to 33 wt% based on the total weight of the polyurethane composition as 100 wt%.

**11.** The method according to claim 8 or 9, **characterized in that** the component b2) is one, two or more selected from the group consisting of hydroxyethyl methacrylate, hydroxypropyl methacrylate, hydroxybutyl methacrylate, hydroxyethyl acrylate, hydroxypropyl acrylate and hydroxybutyl acrylate.

**12.** The method according to claim 1 or 2, **characterized in that** the method further comprises:

providing a reaction injection device (40), which comprises at least two storage tanks (48, 49) for accommodating the components of the polyurethane resin, a vacuumizing device (50) and feed unit (44a, 44b), wherein each of the feed unit (44a, 44b) is connected to the storage tank (48, 49) via a feed line (41, 42) and a mixing unit (43), the components from the feed units (44a, 44b) are mixed together;
wherein the rim of the mold is sealed and the mold is connected to at least a injection line (31), which can be used for vacuumizing the mold (5) and supplying the mixed components to the mold (5); and the mold comprises at least a drying channel (32) for providing a drying gas;
during the vacuum infusion, the drying gas is supplied to the mold to dry the core material, the reinforcing material and/or the flow medium (21) placed in the mold; and the mold (5) is vacuumized by means of a vacuum source (34), and
the mold is connected to the reaction injection device (40) via an injection line (45) at the injection line (31); and mold can be vacuumized via the injection line (45) through a laterally closable outlet (46), which is connected to a vacuum source (47);
degassing the mold (5) and the layers (21) contained therein, the injection line (45), and the optional feed unit (44a, 44b)/mixing unit (43) with the vacuum source (47) and drying, wherein the drying gas can be introduced via the drying channel (32);
beginning the vacuum infusion process with introducing the degassed components in the feed lines (41, 42) from the storage tanks (48, 49) into the feed units (44a, 44b) of the reaction injection device (40), and obtaining the polyurethane resin from the components in the mixing unit (43), wherein the outlet (46) of the vacuum source (47) is closed before the polyurethane resin arrives;
injecting the polyurethane resin into the mold (5) via the injection line (31) while vacuumizing the mold (5) via the drying channel (32) by the vacuum source (34), wherein the injection pressure measured at the injection port of the mold (5) is lower than the external pressure.

**13.** A polyurethane composite obtained by the method for preparing a polyurethane composite by a vacuum infusion process according to any one of claims 1 to 12.

**14.** Use of the polyurethane composite obtained by the method for preparing a polyurethane composite by a vacuum infusion process according to any one of claims 1 to 12 in a wind turbine blade.

**15.** A polyurethane product comprising a polyurethane composite obtained by the method for preparing a polyurethane composite by a vacuum infusion process according to any one of claims 1 to 12.

**16.** The polyurethane product according to claim 15, **characterized in that** the polyurethane product is selected from the group consisting of a wind turbine blade, a radome, a single or sandwich continuous sheet, preferably a spar cap, a web plate, a blade root and/or a blade housing of a wind turbine blade.

Fig. 1

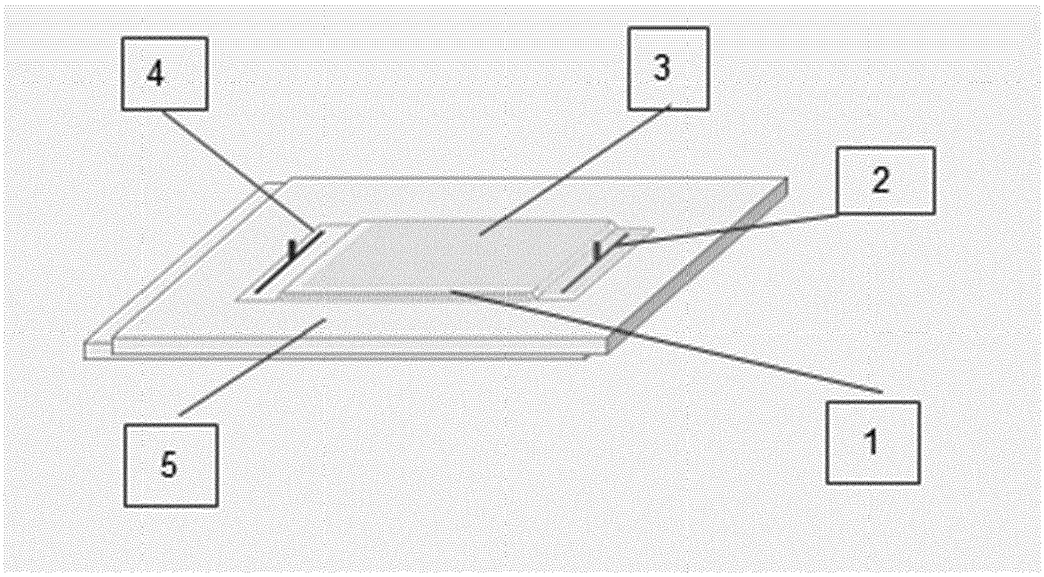

Fig. 2

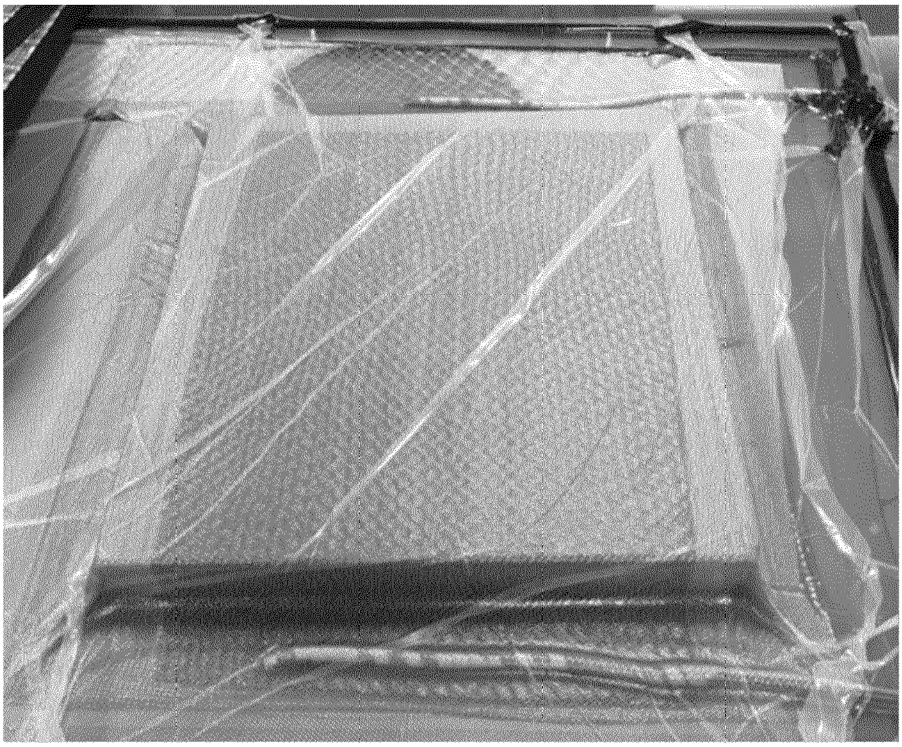

Fig. 3

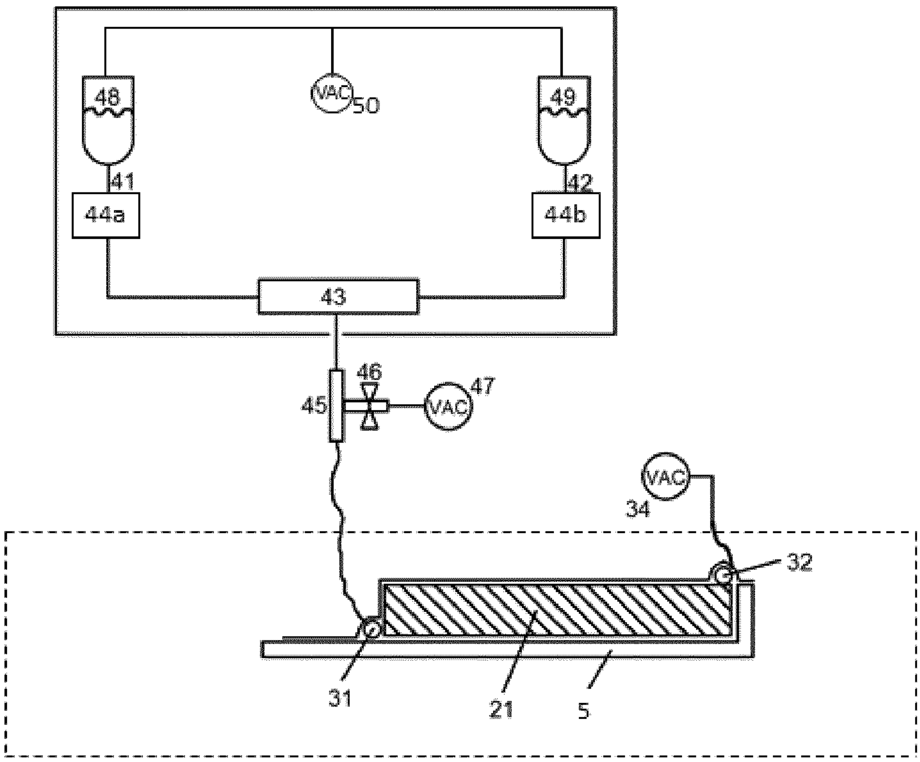

Europäisches Patentamt
European Patent Office
Office européen des brevets

# EUROPEAN SEARCH REPORT

Application Number
EP 19 18 2764

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>A | EP 2 905 303 A1 (JOHNS MANVILLE [US]) 12 August 2015 (2015-08-12)<br>* paragraphs [0008], [0009], [0022], [0035]; figure 1 * | 1-5, 13-16<br>7 | INV.<br>B29C70/48<br>B29D99/00 |
| A | WO 2017/112012 A2 (JEREZ ROBERTO VELOZZI [US]) 29 June 2017 (2017-06-29)<br>* figures 10,11 * | 1 | |
| A | US 2012/159785 A1 (PYLES ROBERT A [US] ET AL) 28 June 2012 (2012-06-28)<br>* no heating, no vartm;<br>paragraph [0045]; figure 3 * | 1 | |

| TECHNICAL FIELDS SEARCHED (IPC) |
|---|
| B29C<br>B29L<br>B29D |

~~The present search report has been drawn up for all claims~~

6

| Place of search | Date of completion of the search | Examiner |
|---|---|---|
| The Hague | 17 December 2019 | Boone, John |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

Europäisches Patentamt
European Patent Office
Office européen des brevets

Application Number
EP 19 18 2764

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

## LACK OF UNITY OF INVENTION

The Search Division considers that the present European patent application does not comply with the requirements of unity of invention and relates to several inventions or groups of inventions, namely:

see sheet B

☐ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☒ None of the further search fees have been paid within the fixed time limit. The present European search report has been drawn up for those parts of the European patent application which relate to the invention first mentioned in the claims, namely claims:

1-5, 7, 13-16

☐ The present supplementary European search report has been drawn up for those parts of the European patent application which relate to the invention first mentioned in the claims (Rule 164 (1) EPC).

Europäisches Patentamt
European Patent Office
Office européen des brevets

# LACK OF UNITY OF INVENTION SHEET B

Application Number

EP 19 18 2764

The Search Division considers that the present European patent application does not comply with the requirements of unity of invention and relates to several inventions or groups of inventions, namely:

1. claims: 1-5, 7, 13-16

   Method for preparing a polyurethane composite comprising heating.

   ---

2. claim: 6

   A peel ply, and said peel ply is preferably a polyester peel ply.

   ---

3. claims: 8-11

   A polyurethane composition

   ---

4. claim: 12

   A reaction injection device comprising a drying channel for providing a drying gas wherein the drying gas can be introduced via the drying channel

   ---

# ANNEX TO THE EUROPEAN SEARCH REPORT ON EUROPEAN PATENT APPLICATION NO. EP 19 18 2764

This annex lists the patent family members relating to the patent documents cited in the above-mentioned European search report. The members are as contained in the European Patent Office EDP file on
The European Patent Office is in no way liable for these particulars which are merely given for the purpose of information.

17-12-2019

| Patent document cited in search report | Publication date | Patent family member(s) | Publication date |
|---|---|---|---|
| EP 2905303 A1 | 12-08-2015 | EP 2905303 A1 | 12-08-2015 |
| | | ES 2586119 T3 | 11-10-2016 |
| | | US 2016108188 A1 | 21-04-2016 |
| | | US 2017121474 A1 | 04-05-2017 |
| WO 2017112012 A2 | 29-06-2017 | CN 108290368 A | 17-07-2018 |
| | | EP 3349981 A2 | 25-07-2018 |
| | | JP 2018531169 A | 25-10-2018 |
| | | US 2017226674 A1 | 10-08-2017 |
| | | WO 2017112012 A2 | 29-06-2017 |
| US 2012159785 A1 | 28-06-2012 | AU 2010290032 A1 | 23-02-2012 |
| | | BR 112012008312 A2 | 24-09-2019 |
| | | CA 2772495 A1 | 10-03-2011 |
| | | CN 102753333 A | 24-10-2012 |
| | | EP 2473333 A2 | 11-07-2012 |
| | | JP 6073418 B2 | 01-02-2017 |
| | | JP 2013504007 A | 04-02-2013 |
| | | JP 2015214981 A | 03-12-2015 |
| | | KR 20120083302 A | 25-07-2012 |
| | | RU 2012112871 A | 10-10-2013 |
| | | US 2012159785 A1 | 28-06-2012 |
| | | WO 2011028271 A2 | 10-03-2011 |
| | | ZA 201201243 B | 24-04-2013 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- CA 2477564 C
- CN 103669616 B
- CN 103072287 A
- WO 2008119942 A
- CN 1108334 C
- CN 104974502 A
- GB 1200942016 T


### Non-patent literature cited in the description


- Makromolekulare Stoffe. **HOUBEN WEYL.** Methoden der Organischen Chemie. Georg Thieme Verlag, 1963, vol. XIV/2, 17
- **YIJUN LIU.** Handbook of Polyurethane Raw Materials and Auxiliaries. 01 April 2005
- **HOUJUN LIU.** Polyurethane Elastomer. August 2012